# EUROPEAN PATENT APPLICATION

(11) **EP 4 600 714 A1**
(43) Date of publication of application: **13.08.2025**
(21) Application number: 23949817.3
(22) Date of filing: 22.08.2023
(51) Int. Cl.: G02B 27/01, G02B 27/09, G02B 27/00, G02B 5/10, G09F 19/18, B60K 35/00

(54) **DISPLAY DEVICE**

(71) Applicant: LG Electronics Inc., Yeongdeungpo-gu Seoul 07336 (KR)
(72) Inventor: LEE, Bosun, Seoul 06772 (KR); LEE, Gyeongeon, Seoul 06772 (KR); KIM, Kyunglack, Seoul 06772 (KR); KOH, Seungsik, Seoul 06772 (KR); KIM, Dongwook, Seoul 06772 (KR); LEE, Seungwon, Seoul 06772 (KR); AHN, Jisun, Seoul 06772 (KR); CHOI, Jaehyun, Seoul 06772 (KR); LEE, Changhun, Seoul 06772 (KR)
(74) Representative: Vossius & Partner Patentanwälte Rechtsanwälte mbB
(86) International application number: PCT/KR2023/012397
(87) International publication number: WO 2025/041877

(57) **Abstract**

A display device comprises a picture generation unit from which image light is emitted; a wave guide having a first optical element formed in a first region facing the picture generation unit and a second optical element formed in a second region not facing the picture generation unit, and disposed on a lower side of a windshield of a vehicle; and a curved mirror facing the second optical element.

## Description

### [Technical Field]

The present invention relates to a display device.

### [Background Art]

Display devices mainly use flat panel display comprising liquid crystal display (LCD), organic light emitting diode (OLED) display, and plasma display panels (PDP), etc.

Among display devices, a head-up display is a device installed in a vehicle that emits image light toward the windshield of the vehicle. A head-up display can display various information comprising driving information while the vehicle is driving.

An example of a display device may be a display device disclosed in International Publication No. WO 2009/101236 A1 (on August 20, 2009, published), wherein the display device comprises a light source emitting light, an illumination unit that disperses light emitted from the light source to provide illumination light, a reflective light modulator array comprising a plurality of pixels for modulating the illumination light, and an imaging optical system that focuses or collimates light reflected from the pixels, wherein the illumination unit comprises a substrate having two surfaces separated by a predetermined distance, and the substrate comprises an incoupling unit that couples light from the light source to the substrate to form a waveguide beam confined to the substrate by internal total reflection on the surfaces, and an outcoupling unit that couples light of the waveguide beam out of the substrate to provide the illumination light.

### [Disclosure]

### [Technical Problem]

The present embodiment provides a display device that minimizes distortion due to the curvature of a windshield of a vehicle.

### [Technical Solution]

A display device according to the present embodiment comprises a picture generation unit from which image light is emitted; a wave guide having a first optical element formed in a first region facing the picture generation unit and a second optical element formed in a second region not facing the picture generation unit, and disposed on a lower side of a windshield of a vehicle; and a curved mirror facing the second optical element.

The picture display unit and the curved mirror may be disposed at a lower side of the wave guide.

The first optical element and the second optical element mab be formed on a lower surface of the wave guide.

An upper surface of the curved mirror may be a convex.

The wave guide and the curved mirror may be each tilted at different angles,

The wave guide and the curved mirror may have an angular difference of 4° to 6°.

The wave guide may be tilted by 40° or less or 140° or more with respect to the vertical plane.

A display device according to the present embodiment may comprise an picture generation unit from which image light is emitted; a wave guide having a first optical element formed in a first region facing the picture generation unit and a second optical element formed in a second region not facing the picture generation unit, and disposed on a lower side of a windshield of a vehicle; and a double lens facing the second optical element.

The double lens may comprise a convex lens; and a concave lens combined with the convex lens and having a refractive index different from a refractive index of the convex lens.

The picture generation unit and the double lens may be disposed between the wave guide and the windshield.

The first optical element and the second optical element may be formed on an upper surface of the wave guide.

The wave guide may be tilted by 40° or less or 140° or more with respect to the vertical plane.

A display device according to the present embodiment comprises an picture generation unit from which image light is emitted; and a wave guide having a first optical element formed in a first region facing the picture generation unit and a second optical element formed in a second region not facing the picture generation unit, and disposed on a lower side of a windshield of a vehicle, the picture generation unit may emit compensation image light that compensates for distortion due to a curvature of the windshield.

The compensation image light may have different lengths at the left end and the right end.

The wave guide may be tilted by 40° or less or 140° or more with respect to the vertical plane.

### [Advantageous Effect]

According to this embodiment, the distortion due to the curvature of the windshield can be minimized by the curved mirror facing the second optical element.

According to this embodiment, the waveguide may be tilted by 40° or less or 140° or more with respect to the vertical plane, so as to minimize back-reflection due to sunlight.

According to this embodiment, the waveguide and the curved mirror are disposed to be inclined at an angle difference of 4° to 6°, so as to minimize back-reflection due to sunlight.

According to this embodiment, the double lens facing the second optical element is composed of a convex lens and a concave lens, so as to minimize distortion due to the curvature of the windshield.

According to this embodiment, the picture generation unit emits compensation image light that compensates for distortion due to the curvature of the windshield, so as to minimize distortion due to the curvature of the windshield with a simple structure.

### [Description of Drawings]

FIG. 1 is a side view illustrating an example of a display device according to the present embodiment,
FIG. 2 is a side view illustrating a modified example of an example of a display device according to the present embodiment,
FIG. 3 is a side view illustrating another example of a display device according to the present embodiment,
FIG. 4 is a side view illustrating the other example of a display device according to the present embodiment,
FIG. 5 is a side view illustrating a modified example of the other example of a display device according to the present embodiment.

### [Best Mode]

Hereinafter, specific embodiments of the present invention will be described in detail with reference to the drawings.

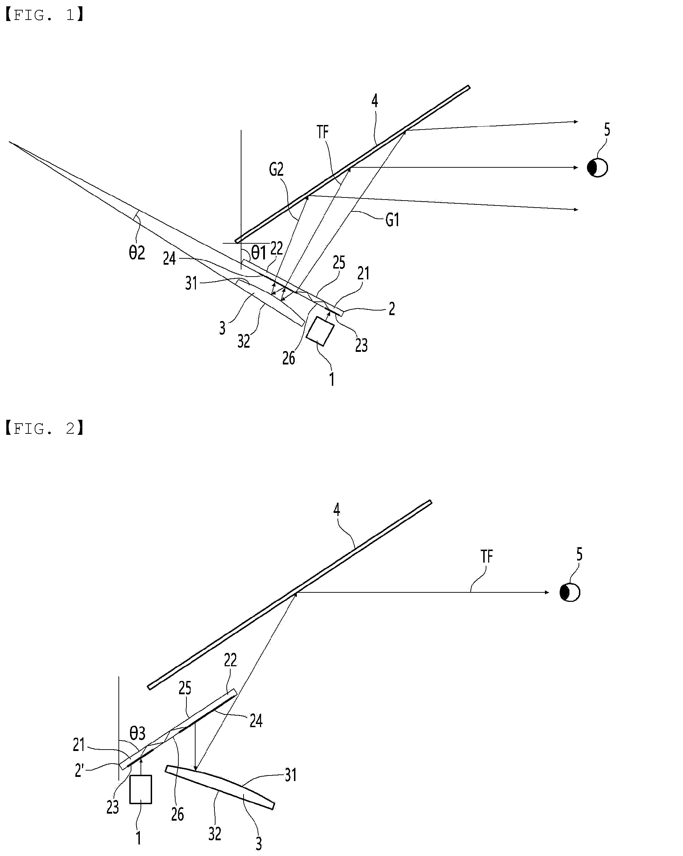

FIG. 1 is a side view illustrating an example of a display device according to the present embodiment.

An example of a display device may comprise a picture generation unit 1 (PGU), a wave guide 2, and a curved mirror 3.

The display device may comprise a housing disposed on the lower side of a windshield 4 of a vehicle. A space may be formed inside the housing, and the picture generation unit 1, the wave guide 2, and the curved mirror 3 may be accommodated in the space or disposed in the housing.

The display device may be an augmented reality head-up display (ARHUD) installed in a vehicle and using a wave guide 2.

The picture generation unit 1 may emit image light toward the wave guide 2.

The picture display unit 1 may be disposed on the lower side of the wave guide 2.

An example of the picture generation unit 1 may comprise a light source such as an LED, and a display panel such as an LCD. The picture generation unit 1 may comprise at least one lens disposed between the light source and the display panel.

The other example of the picture generation unit 1 may comprise an organic light emitting diode (OLED) display panel.

The wave guide 2 may be disposed on the lower side of the windshield 4 of the vehicle.

The wave guide 2 may be tilted obliquely, as shown in FIG. 1. The wave guide 2 may be tilted by more than 140° with respect to the vertical plane.

When the wave guide 2 is disposed parallel to the horizontal plane, sunlight provided from the outside of the vehicle may be projected onto the driver's eyes 5 (eye box) by the wave guide 2 and the curved mirror 3. The sunlight that passed through the windshield 4 may be reflected by the curved mirror 3 after passing through the wave guide 2, and may again pass through the wave guide 2, and may be projected onto the driver's eyes 5 by the windshield 4.

If the wave guide 2 is disposed parallel to the horizontal plane, the internal reflection (back-reflection) due to sunlight may be large.

It is preferable that the wave guide 2 be tilted at an angle that may minimize the internal reflection (back-reflection) due to sunlight, and the angle θ1 at which the wave guide 2 is tilted may vary depending on the angle of the wind shield 4.

For example, when the wind shield 4 is disposed to be tilted at 65° with respect to the vertical plane, if the wave guide 2 is tilted at 140° or more with respect to the vertical plane, the internal reflection (back-reflection) due to sunlight may be minimized.

For the other example, when the wind shield 4 is disposed to be tilted at 70° with respect to the vertical plane, if the wave guide 2 is tilted at 145° or more with respect to the vertical plane, the internal reflection (back-reflection) due to sunlight may be minimized.

As the more the windshield 4 is laid down, the greater the tilt angle θ1 of the wave guide 2 is preferably.

The wave guide 2 may comprise a first region 21 facing the picture generation unit 1 and a second region 23 not facing the picture generation unit 1.

A first optical element 23 may be formed in the first region 21. The first optical element 23 may be formed on the lower surface 26 of the wave guide 2.

The wave guide 2 may be a flat plate substrate in which the gap between the upper surface 25 and the lower surface 26 is constant in the length direction of the wave guide 2, and the upper surface 25 and the lower surface 26 are each flat.

The waveguide 2 may be a heterogeneous substrate in which the gap between the upper surface 25 and the lower surface 26 is different in the length direction of the waveguide 2, or may be a curved substrate in which each of the upper surface 25 and the lower surface 26 is curved.

If the waveguide 2 is a heterogeneous substrate, the substrate may be difficult to manufacture, and if the waveguide 2 is a curved substrate, it may be difficult to manufacture the nano-imprinting grating of the first optical element 23 or the second optical element 24.

It is preferable that the waveguide 2 is a flat substrate.

The first optical element 23 may be a diffraction optical element (DOE) or a holographic optical element (HOE).

The first optical element 23 may be an in-coupling portion that couples image light emitted from the picture generation unit 1 to the waveguide 2.

The image light emitted from the picture generation unit 1 may be refracted by the first optical element 23, and may be internally totally reflected at least once by the upper surface 25 and the lower surface 26, and the totally reflected image light may be refracted by the second optical element 24 to the curved mirror 3 or reflected toward the upper side of the wave guide 2.

Here, the image light reflected toward the upper side of the wave guide 2 by the second optical element 24 may be a ghost image G1 projected around the driver's eyes 5.

A second optical element 24 may be formed in the second region 22. The second optical element 24 may be formed on the lower surface of the wave guide 2.

The second optical element 24 may be spaced apart from the first optical element 23. The second optical element 24 may be spaced apart from the first optical element 23 in the length direction of the wave guide 2.

The second optical element 24 may be a diffraction optical element (DOE) or a holographic optical element (HOE).

The second optical element 24 may be an out-coupling portion that couples the image light to the outside of the wave guide 2 and provides the image light to the curved mirror 3 or the wind shield 4.

The second optical element 24 may be the same optical element as the first optical element 23 or a different optical element.
If the first optical element 23 is a diffractive optical element DOE, the second optical element 24 may be a diffractive optical element DOE
If the first optical element 23 is a holographic optical element (HOE), the second optical element 24 may be a holographic optical element (HOE)
If the first optical element 23 is one of a diffractive optical element (DOE) and a holographic optical element (HOE), the second optical element (24) may be the other of the diffractive optical element (DOE) and the holographic optical element (HOE).

The image light refracted by the second optical element 24 to the curved mirror 3 may be reflected by the curved mirror 3.

Some of the image light reflected by the curved mirror 3 may pass through the second optical element 24 and the wave guide 2 and may be directed toward the windshield 4. This image light may become a target virtual image TF and may be projected onto the driver's eyes 5. The target virtual image TF may be a virtual image reflected once by the curved mirror 3.

Other portion of the image light reflected from the curved mirror 3 may not pass through the second optical element 24, may be reflected to the curved mirror 3, may be re-reflected by the curved mirror 3 to the second optical element 24, and may then pass through the second optical element 24 and the wave guide 2 to be emitted to the windshield 4. This image light may become a ghost virtual image G2 projected around the driver's eyes 5. This ghost virtual image G2 may be a virtual image reflected twice by the curved mirror 3.

The curved mirror 3 may face the second optical element 24. The curved mirror 3 may be disposed below the wave guide 2. The curved mirror 3 may reflect the image light refracted by the second optical element 24 to the second optical element 24.

The rear portion of the curved mirror 3 may overlap with the picture generation unit 1 in the front and rear direction.

The upper surface 31 of the curved mirror 3 may be convex. The lower surface 32 of the curved mirror 3 may be a flat plane.

The curved mirror 3 may be tilted at a different angle from the wave guide 2.

The wave guide 2 and the curved mirror 3 may have an angular difference θ2 of 4° to 6° so as to minimize internal reflection (back-reflection) due to sunlight. It is preferable that this angular difference θ2 has an angular difference of about 5° or more.

FIG. 2 is a side view illustrating a modified example of an example of a display device according to the present embodiment.

A variation of the display device may comprise an picture generation unit 1, a wave guide 2' tilted by 40° or less with respect to a vertical plane, and a curved mirror 3.

The picture generation unit 1 may be the same as or similar to an example the picture generation unit 1 of the display device, and a detailed description thereof will be omitted to avoid redundant description.

It is preferable that the wave guide 2' be tilted at an angle that may minimize internal reflection (back-reflection) due to sunlight, and the angle θ3 at which the wave guide 2' is tilted may be different according to depending the angle of the wind shield 4.

For example, when the wind shield 4 is disposed to be tilted at 65° with respect to a vertical plane, if the wave guide 2 is tilted by 40° or less with respect to the vertical plane, the internal reflection (back-reflection) due to sunlight may be minimized

As the other example, when the windshield 4 is disposed to be tilted at 70° with respect to the vertical plane, if the waveguide 2 is tilted at 35° or less with respect to the vertical plane, the internal reflection (the back-reflection) due to sunlight may be minimized.

The waveguide 2' may have a configuration that is identical or similar to the waveguide 2' of the display device except that the tilt angle θ3 with respect to the vertical plane is 40° or less, and in order to avoid redundant description, the first region 21, the first optical element 23, the second region 22, the second optical element 24, the upper surface 25, and the lower surface 26 use the same symbols and a detailed description thereof is omitted.

The curved mirror 3 may be disposed at the rear of the picture generation unit 1. The curved mirror 3 may be identical or similar to the curved mirror 3 of an example of the display device, and the upper surface 31 and the lower surface 32 use the same symbols and a detailed description thereof is omitted.

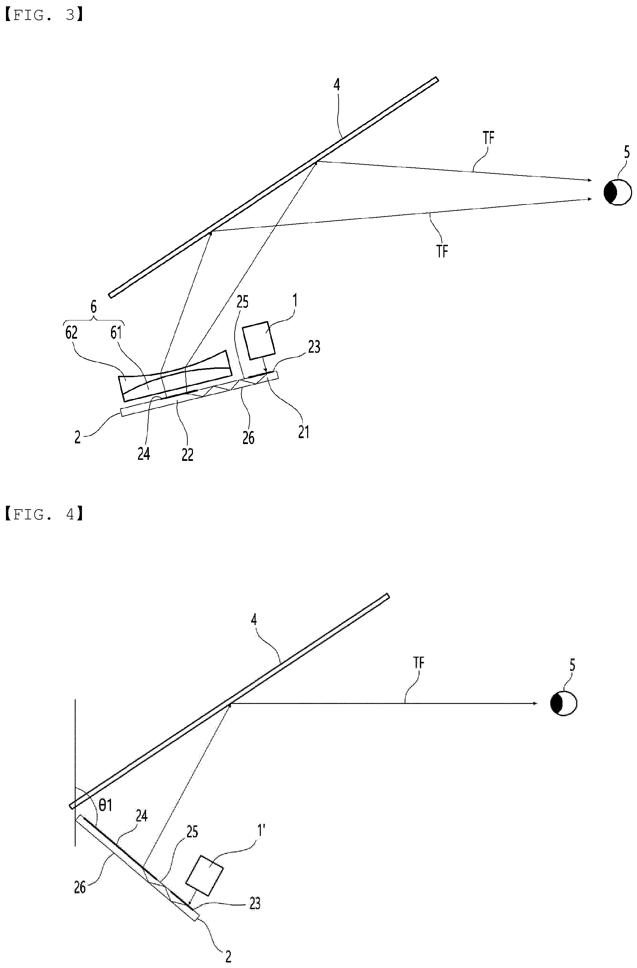

FIG. 3 is a side view illustrating another example of a display device according to the present embodiment.

Another example of a display device may comprise a picture generation unit 1, a wave guide 2, and a double lens 6.

The picture generation unit 1 may emit image light. The picture generation unit 1 may be disposed above the wave guide 2. The picture generation unit 1 may be disposed between the wave guide 2 and the wind shield 4.

The picture generation unit 1 may be the same as or similar to the picture generation unit 1 of an example of a display device, and a detailed description thereof will be omitted to avoid redundant description.

The wave guide 2 may have a first optical element 23 formed in a first region 21 facing the picture generation unit 1, and a second optical element 24 formed in a second region 22 not facing the picture generation unit 1. The wave guide 2 may be disposed below the wind shield 4 of the vehicle.

The first optical element 23 and the second optical element 24 may be formed on the upper surface of the wave guide 2.

The wave guide 2 may be tilted by 40° or less or 140° or more with respect to the vertical plane.

The wave guide 2 may be the same as or similar to the wave guide 2 of an example of a display device, and a detailed description thereof will be omitted to avoid redundant description.

The double lens 6 may face the second optical element 24. The double lens 6 may be disposed at the upper side of the wave guide 2. The double lens 6 may be disposed between the wave guide 2 and the wind shield 4.

The double lens 6 may comprise a pair of lenses 61 and 62 having different refractive indices.

The double lens 6 may comprise a convex lens 61 and a concave lens 62.

The upper surface of the convex lens 61 may be convex. The lower surface of the convex lens 61 may be flat.

Both surfaces of the convex lens 61 may be concave.

The concave lens 62 may be combined with the convex lens 61. The lower surface of the concave lens 62 may be matched with the upper surface of the convex lens 61.

The concave lens 62 may have a different refractive index from a refractive index of the convex lens.

After being emitted from the picture generation unit 1, the image light coupled into the first optical element 23 may be internally totally reflected in the wave guide 2 and may be outcoupled in the second optical element 24 and directed toward the double lens 6.

The image light may be directed toward the windshield 4 by passing through the convex lens 62 and the concave lens 61 in sequence, and the distortion due to the curvature of the windshield 4 may be reflected in the virtual image by the double lens 6, and the distortion due to the curvature of the windshield 4 may be compensated.

FIG. 4 is a side view illustrating the other example of a display device according to the present embodiment.

The other example of a display device may comprise a picture generation unit 1' and a wave guide 2.

The picture generation unit 1' may emit image light toward the wave guide 2.

The picture generation unit 1' may emit compensation image light that compensates for distortion in the curvature of the wind shield 4.

An example of the compensation image light may be distorted image light, for example, lengths of image light at the left end and the right end are different.

If the picture generation unit 1' does not emit compensation image light but emits rectangular image light, an image of which length at the right end is longer than length at the left end may be projected to the user's eyes.

On the other hand, if the picture generation unit 1' takes this distortion into account and emits image light (i.e., compensation image light) whose length at the right end is shorter than that at the left end, an image whose length at the right end and the left end are the same may be projected to the user's eyes.

The picture generation unit 1' may be disposed on the upper rear side of the wave guide 2.

The picture generation unit 1' may be identical to or similar to the picture generation unit 1 of an example of a display device except that it emits compensation image light, and a detailed description thereof will be omitted to avoid redundant description.

The wave guide 2 may have a first optical element 23 formed in a first region 21 facing the picture generation unit 1', and a second optical element 23 formed in a second region 22 not facing the picture generation unit 1'. The wave guide 2 may be disposed at the lower side of the windshield 4 of the vehicle.

The wave guide 2 may be tilted by 140° or more with respect to the vertical plane.

The wave guide 2 may be identical to or similar to the wave guide 2 of an example of a display device, and a detailed description thereof will be omitted to avoid redundant description.

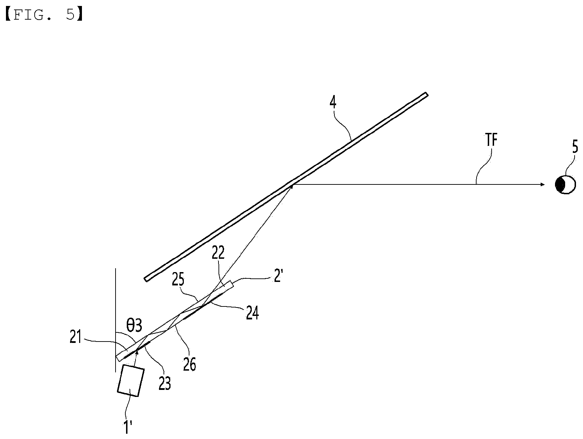

FIG. 5 is a side view illustrating a modified example of the other example of a display device according to the present embodiment.

A variation of the other example of the display device may comprise an picture generation unit 1' and a wave guide 2'.

The picture generation unit 1' may be the same as the picture generation unit 1' of the other example of the display device, and a detailed description thereof will be omitted to avoid redundant description.

The picture generation unit 1' may be disposed below the wave guide 2.

The wave guide 2' may be tilted by 40° or less with respect to a vertical plane, as in the variation of an example of the display device.

The first optical element 23 and the second optical element 24 may be formed on the lower surface 26 of the wave guide 2'.

The wave guide 2' may be the same as or similar to the wave guide 2' comprised in the variation of an example the display device, and a description thereof will be omitted to avoid redundant description.

Meanwhile, the present invention is not limited to the above-described embodiments and modified examples, and the first optical element 23 and the second optical element 24 may be formed on both sides of the wave guide 2 and 2', and the upper picture generation unit may be disposed on the upper side of the wave guide 2 and 2' while the lower picture generation unit may be disposed on the lower side of the wave guide 2 and 2', and it goes without saying that the positions of the picture generation unit 1 and 1' or the first optical element 23 and the second optical element 24 may be changed as needed.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but rather to explain it, and the scope of the technical idea of the present disclosure is not limited by these embodiments.

The scope of protection of the present disclosure should be interpreted in accordance with the claims below, and all technical ideas within the equivalent scope should be construed as being comprised in the scope of rights of the present disclosure.

## Claims

1. A display device comprising;
a picture generation unit from which image light is emitted;
a wave guide having a first optical element formed in a first region facing the picture generation unit and a second optical element formed in a second region not facing the picture generation unit, and disposed on a lower side of a windshield of a vehicle; and
a curved mirror facing the second optical element.

2. The display device of claim 1,
wherein the picture display unit and the curved mirror are disposed at a lower side of the wave guide.

3. The display device of claim 2,
wherein the first optical element and the second optical element are formed on a lower surface of the wave guide.

4. The display device of claim 1,
wherein an upper surface of the curved mirror is a convex.

5. The display device of claim 1,
wherein the wave guide and the curved mirror are each tilted at different angles, and the wave guide and the curved mirror have an angular difference of 4° to 6°.

6. The display device of claim 1,
wherein the wave guide is tilted by 40° or less or 140° or more with respect to the vertical plane.

7. A display device comprising;
a picture generation unit from which image light is emitted;
a wave guide having a first optical element formed in a first region facing the picture generation unit and a second optical element formed in a second region not facing the picture generation unit, and disposed on a lower side of a windshield of a vehicle; and
a double lens facing the second optical element,
wherein the double lens comprises
a convex lens; And
a concave lens combined with the convex lens and having a refractive index different from a refractive index of the convex lens.

8. The display device of claim 7,
wherein the picture generation unit and the double lens are disposed between the wave guide and the windshield.

9. The display device of claim 8,
wherein the first optical element and the second optical element are formed on an upper surface of the wave guide.

10. The display device of claim 7,
wherein the wave guide is tilted by 40° or less or 140° or more with respect to the vertical plane.

11. A display device comprising;
a picture generation unit from which image light is emitted; and
a wave guide having a first optical element formed in a first region facing the picture generation unit and a second optical element formed in a second region not facing the picture generation unit, and disposed on a lower side of a windshield of a vehicle,
wherein the picture generation unit emits compensation image light that compensates for distortion due to a curvature of the windshield.

12. The display device of claim 11,
wherein the compensation image light has different lengths at the left end and the right end.

13. The display device of claim 11,
wherein the wave guide is tilted by 40° or less or 140° or more with respect to the vertical plane.
